# EUROPÄISCHE PATENTSCHRIFT

(11) **EP 1 321 037 B1**
(45) Veröffentlichungstag und Bekanntmachung des Hinweises auf die Patenterteilung: **31.08.2005**
(21) Anmeldenummer: 02102762.8
(22) Anmeldetag: 16.12.2002
(51) Int. Cl.: A01M 7/00

(54) **System zum automatischen Ausgleichen der Wind-Drift für ein landwirtschaftliches Sprühgerät**
System for automatic compensation of the wind drift in an agricultural spray apparatus
Système de compensation automatique de la dérive due au vent pour un appareil de pulvérisation agricole

(30) Priorität: 19.12.2001 US 24909
(43) Veröffentlichungstag der Anmeldung: 25.06.2003
(73) Patentinhaber: DEERE & COMPANY, Illinois 61265-8098 (US)
(72) Erfinder: Schaffter, Barry Wayne, IA 50325, Clive (US); Pickett, Terence Daniel, IA 50263, Waukee (US)
(74) Vertreter: Holst, Sönke

(56) Entgegenhaltungen:
- US-A- 5 704 546
- US-A- 5 751 576

## Beschreibung

Die Erfindung betrifft ein System zum automatischen Ausgleichen der Wind-Drift für ein landwirtschaftliches Sprühgerät, mit einer Steuereinheit, die eingerichtet ist, Eingabedaten zu erhalten, die Informationen bezüglich der Windgeschwindigkeit, Windrichtung, der Vortriebsgeschwindigkeit und Richtung des Sprühgeräts und der gewünschten Überlappung beim Sprühen enthalten, wobei die Steuereinheit eingerichtet ist, Ausgabedaten zu erzeugen.

In der Landwirtschaft ist das Aussprühen von Bodennährstoffen, Insektiziden und Pestiziden gebräuchlich und in der Regel mit der Verwendung eines Sprühfahrzeugs mit einem Ausleger verbunden, der hinter einem Traktor gezogen wird. Kürzlich wurden verschiedene Navigationssysteme mit einer verbesserten Genauigkeit entwickelt, um den Traktor auf einem gewünschten Weg über das Feld zu lenken. Beispiele derartiger Lenksysteme sind Produkte der Firmen John Deere (Parallel Tracking und AutoTrak), IntegriNautics (AutoSteer), Trimble und Beeline.

Jedoch hat keines dieser derzeit verfügbaren Navigationssysteme die Mittel oder algorithmischen Konzepte, um die Wind-Drift des ausgesprühten Mittels von den Düsen zu berücksichtigen. Derartige Wind-Drift führt zu einer unrichtigen Überlappung der ausgesprühten Lösungen bei aufeinander folgenden Überfahrten. Die quer zum Weg stattfindende Wind-Drift kann beträchtlich sein und eine Über- oder Unteranwendung der Sprühlösung zur Folge haben. Die Wind-Drift kann auch zu Umweltproblemen führen, wenn sich beispielsweise die Sprühmittel übermäßig überlappen oder wenn das Sprühmittel in ungewünschte Flächen abtreibt.

In der US 5 704 546 A wird ein Sprühfahrzeug mit einer elektronischen Steuerung beschrieben, der Eingabedaten für die auszubringenden Materialmengen, Zonengrenzen Windgeschwindigkeit, Windrichtung, der Geschwindigkeit und Fahrtrichtung des Sprühfahrzeugs vorliegen. Anhand der Daten wird die Ausbringrate und die Tropfengröße selbsttätig eingestellt. Der Weg des Sprühfahrzeugs ist jedoch fest vorgegeben, was es bei stärkerem Wind unmöglich machen kann, manche Bereiche eines Feldes zu beaufschlagen.

Das der Erfindung zu Grunde liegende Problem wird darin gesehen, ein Sprühsystem bereitzustellen, das auch bei Wind ordnungsgemäß arbeitet.

Dieses Problem wird erfindungsgemäß durch die Lehre der Patentansprüche 1 und 8 gelöst, wobei in den weiteren Patentansprüchen Merkmale aufgeführt sind, die die Lösung in vorteilhafter Weise weiterentwickeln.

Es wird ein landwirtschaftliches Sprühgerät vorgeschlagen, das mit einer Steuereinheit ausgestattet ist, die Eingabedaten bezüglich der Windgeschwindigkeit und -richtung, der Sprühgerätevortriebsgeschwindigkeit und -richtung und der gewünschten Überlappung bei zwei benachbarten Sprühvorgängen erhält. Eine Anzahl an Anweisungen ist in die Steuereinheit einprogrammiert, um die Eingabedaten zu verarbeiten und als Reaktion darauf Ausgabedaten zu generieren. Die Steuereinheit ist eingerichtet, Ausgabedaten zu erzeugen, die derart geartet sind, dass die gewünschte Überlappung beim Sprühen erreicht wird, wenn das Sprühgerät anhand der Ausgabedaten der Steuereinheit gelenkt wird. Die Ausgabedaten können an einen Bediener ausgegeben, d. h. insbesondere angezeigt werden, so dass ein Bediener das Sprühgerät (oder ein es tragendes oder ziehendes Fahrzeug) entsprechend lenken kann. Vorzugsweise werden die Ausgabedaten jedoch zur selbsttätigen Lenkung des Sprühgeräts (oder eines es tragenden oder ziehenden Fahrzeugs) herangezogen.

Das System kann auch eine Wetterstation am Sprühgerät umfassen, um die Windgeschwindigkeit und Windrichtung zu erfassen. Diese Daten können auch durch andere Wetterstationen erfasst und über Mobilfunk o.ä. der Steuereinheit zugeführt werden. Die Höhe der Düsen des Sprühgeräts über dem Erdboden kann auch zu den Eingabedaten gehören, die von der Steuereinheit verarbeitet werden.

In den Zeichnungen ist ein nachfolgend näher beschriebenes Ausführungsbeispiel der Erfindung dargestellt. Es zeigt:
- Fig. 1: eine Draufsicht auf einen Traktor mit einem landwirtschaftlichen Sprühgerät, der auf einem Feld positioniert ist, das durch das Sprühgerät mit einer Lösung besprüht wird,

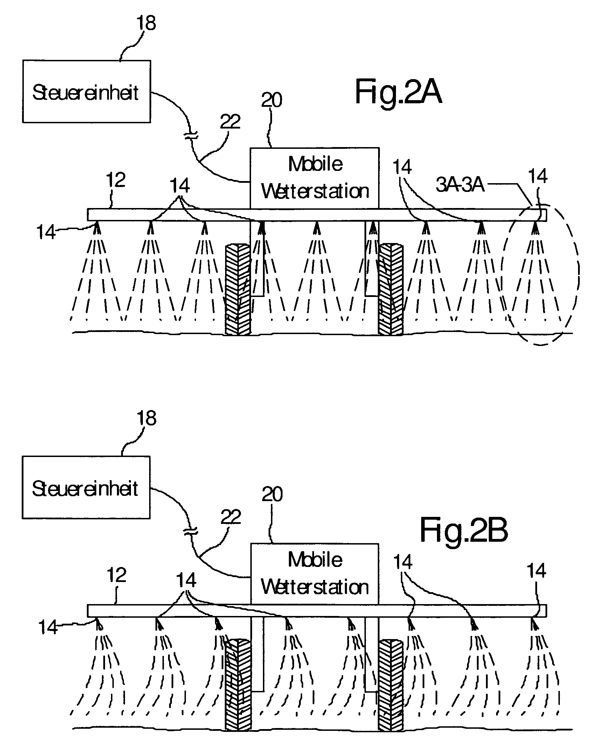

- Fig. 2a: eine vereinfachte rückwärtige Ansicht des Sprühgeräts mit einer erfindungsgemäßen mobilen Wetterstation bei Windstille,
- Fig. 2b: eine ähnliche Ansicht wie in Figur 2a, die das Sprühen bei Wind darstellt,

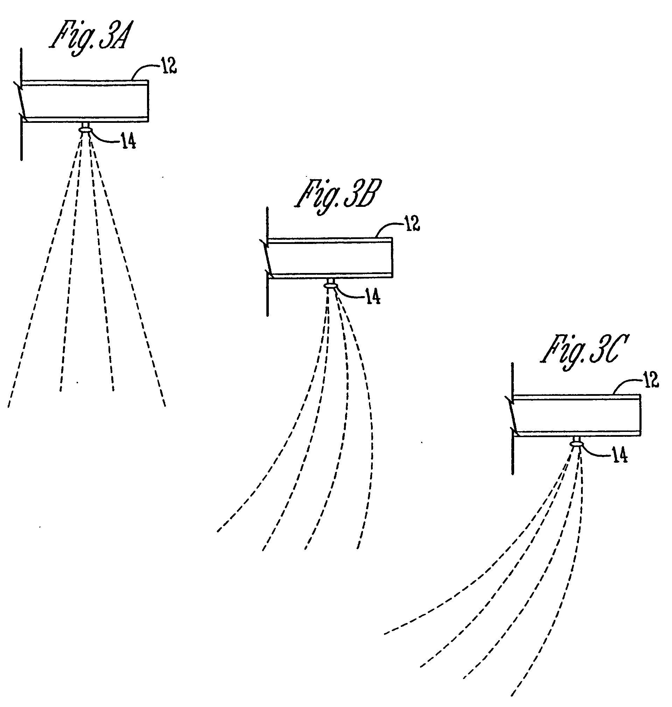

- Fig. 3a: eine vergrößerte Ansicht entlang der Linien 3a-3a der Figur 2,
- Fig. 3b: eine Ansicht ähnlich der Figur 3a, die ein Sprühmuster bei geringem Wind zeigt,
- Fig. 3c: eine Ansicht ähnlich der Figur 3a, die ein Sprühmuster bei starkem Wind zeigt,
- Fig. 4: ein schematisches Blockdiagramm, das die Eingangsdaten und die Ausgangsdaten der Steuereinheit eines erfindungsgemäßen Systems zeigt, und
- Fig. 5: ein Flussdiagramm des erfindungsgemäßen Prozesses.

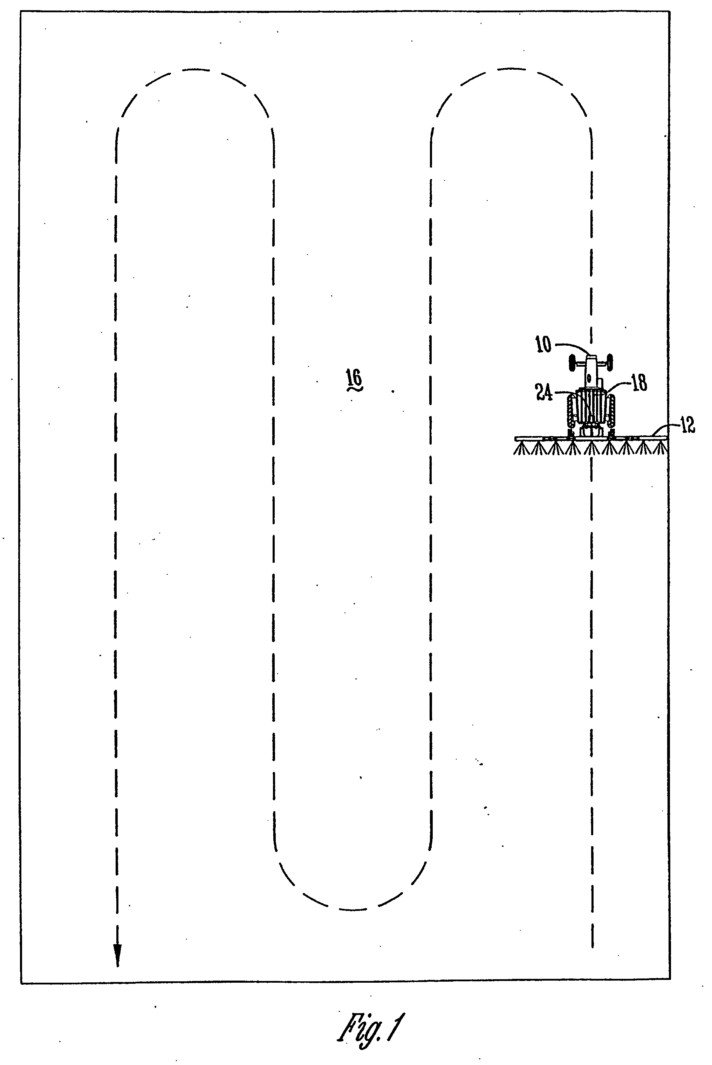

In der Figur 1 ist ein konventioneller Traktor 10 dargestellt, der ein landwirtschaftliches Sprühgerät 12 zieht oder trägt, das eine Vielzahl an Sprühdüsen 14 aufweist. Das Sprühgerät 12 ist eingerichtet, eine Lösung wie Nährstoffe für den Boden (Dünger), Insektizide oder Pestizide aus einem Behälter (nicht gezeigt) durch die Sprühdüsen 14 auf das Feld 16 auszusprühen. Abhängig von den Sprühdüsen 14 kann das Sprühmuster konisch oder elliptisch sein. Idealerweise überlappen die Sprühmuster benachbarter Sprühdüsen 14 sich, wenn überhaupt, in einem Maß, das zum Erreichen einer gleichförmigen Anwendung der Lösung auf dem Feld 16 erforderlich ist. Das Sprühgerät 12 ist ebenfalls konventionell.

Die vorliegende Erfindung bezieht sich auf ein System, das die Wind-Drift der ausgesprühten Lösung automatisch kompensiert, wenn der Traktor 10 und das Sprühgerät 12 sich über das Feld 16 bewegen. Im Einzelnen umfasst das System eine Steuereinheit 18, die zwecks leichten Zugangs durch den Bediener des Traktors 10 vorzugsweise in der Kabine des Traktors 10 angeordnet ist. Eine mobile Wetterstation 20 ist am Sprühgerät 12 bereitgestellt, vorzugsweise in einer Höhe oberhalb der Kabine des Traktors 10, um dadurch Bodenturbulenzen zu vermeiden oder zu minimieren, die ungenaue Messwerte bedingen können. Die Wetterstation 20 erfasst die Windgeschwindigkeit und Windrichtung und erzeugt entsprechende Signale für die Steuereinheit 18. Die Steuereinheit 18 kann mit der Wetterstation 20 über Elektrokabel 22 verdrahtet sein. Alternativ oder zusätzlich kann die Betriebsverbindung zwischen der Steuereinheit 18 und der Wetterstation 20 drahtlos sein, entsprechend bekannter Technologien.

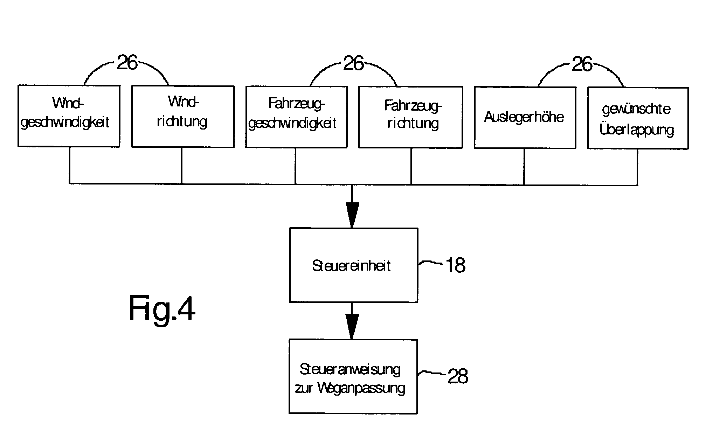

Der Bediener gibt außerdem Daten in die Steuereinheit 18 ein, wie die Traktorgeschwindigkeit, die Traktorrichtung, die gewünschte Sprühüberlappung, den Wegplan, die Windgeschwindigkeit und Windrichtung, und die Höhe des Sprühgeräts 12. Einige oder alle dieser Daten können auch durch Sensoren erfasst werden, z. B. die Windgeschwindigkeit und -richtung mit der Wetterstation 20 und die Traktorgeschwindigkeit durch einen Bodengeschwindigkeitssensor, und der Steuereinheit 18 elektronisch zugeführt werden, um manuelle Eingaben zu erübrigen. Auch der Wegplan kann der Steuereinheit 18 in elektronischer Form zugeführt werden. Die Steuereinheit 18 ist mit einer Menge an Anweisungen oder einem Algorithmus programmiert, um die Eingabedaten 26 zu verarbeiten und Ausgabedaten 28 zu erzeugen, wie in der Figur 4 dargestellt. Die Ausgangsdaten 28 erlauben es, den Traktor 10, der mit einem Standardnavigationssystem 24 ausgestattet ist, (manuell oder selbsttätig) über das Feld 16 zu steuern, um die gewünschte Überlappung des ausgesprühten Mittels zu erreichen, wobei die Wind-Drift berücksichtigt wird.

Das erfindungsgemäße Verfahren erlaubt eine automatische Kompensation der Wind-Drift während des Sprühvorgangs durch das Sprühgerät 12. Entsprechend des Verfahrens werden die Eingabedaten 26 bezüglich der Windgeschwindigkeit, Windrichtung, Sprühgerätegeschwindigkeit, Sprühgeräterichtung, Sprühgerätehöhe und gewünschter Sprühüberlappung erzeugt. Diese Eingabedaten 26 werden der Steuereinheit 18 zugeführt, die dann zum Lenken oder Leiten des Traktors 10 und des daran angebrachten Sprühgeräts 12 über das Feld 16 verwendet werden, um die gewünschte Sprühüberlappung zu erzielen.

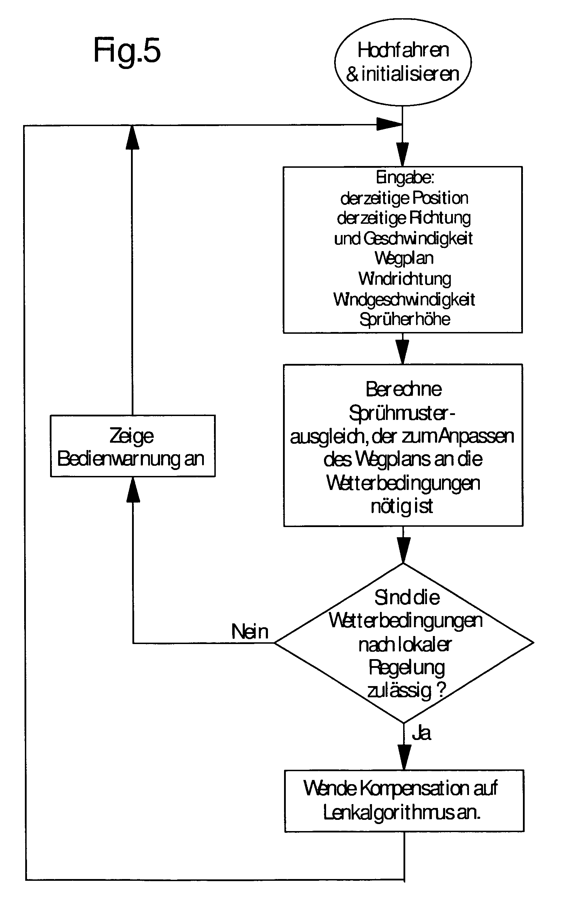

Der erfindungsgemäße Prozess ist in dem Flussdiagramm der Figur 5 schematisch dargestellt. Nach dem Hochfahren und dem Initialisierungsschritt werden die verschiedenen Daten hinsichtlich der Position, Richtung und Geschwindigkeit, des Wegeplans, der Windrichtung, Windgeschwindigkeit und der Höhe des Sprühgeräts 12 eingegeben. Danach wird der Ausgleich für das Sprühmuster berechnet, um den Wegplan unter den gegenwärtigen Wetterbedingungen einzuhalten. Dann wird eine Prüfung durchgeführt, um sicherzustellen, dass Sprühen unter den gegenwärtigen Wetterbedingungen im Lichte lokaler Regelungen zulässig ist. Wenn nicht, wird dem Bediener eine Warnung angezeigt. Wenn die lokalen Regelungen das Sprühen nicht verbieten, wird die Sprühmusterzusammensetzung auf den Lenkalgorithmus der Steuereinheit 18 angewandt. Der Sprühvorgang beginnt dann und geht mit einer sich wiederholenden oder fortdauernden Wiederausführung jedes der obigen Schritte weiter, außer dem Hochfahren und dem Initialisieren.

## Patentansprüche

1. System zum automatischen Ausgleichen der Wind-Drift für ein landwirtschaftliches Sprühgerät (12), mit einer Steuereinheit (18), die eingerichtet ist, Eingabedaten (26) zu erhalten, die Informationen bezüglich der Windgeschwindigkeit, Windrichtung, der Vortriebsgeschwindigkeit und Richtung des Sprühgeräts (12) und der gewünschten Überlappung beim Sprühen enthalten, wobei die Steuereinheit (18) eingerichtet ist, Ausgabedaten (28) zu erzeugen, **dadurch gekennzeichnet, dass** die Ausgabedaten (28) der Steuereinheit (18) Lenkdaten und derart geartet sind, dass die gewünschte Überlappung beim Sprühen erreicht wird, wenn das Sprühgerät (12) anhand der Ausgabedaten (28) der Steuereinheit (18) gelenkt wird.

2. System nach Anspruch 1, mit einer mobilen Wetterstation (20) am Sprühgerät (12) zur Erfassung der Windgeschwindigkeit und Windrichtung.

3. System nach Anspruch 2, wobei die Wetterstation (20) vom Boden beabstandet ist.

4. System nach einem der Ansprüche 1 bis 3, wobei die Eingabedaten (26) weiterhin die Höhe des Sprühgeräts (12) umfassen.

5. System nach einem der Ansprüche 1 bis 4, wobei ein Navigationssystem (24) an die Steuereinheit (18) angeschlossen ist.

6. System nach einem der Ansprüche 1 bis 5, wobei die Ausgabedaten (28) zur selbsttätigen Lenkung des Sprühgeräts (12) genutzt werden.

7. System nach einem der Ansprüche 1 bis 6, wobei die Steuereinheit (18) betreibbar ist, zu überprüfen, ob das Sprühen bei den gegenwärtigen Wetterbedingungen im Licht lokaler Regelungen zulässig ist, und falls es nicht zulässig ist, eine Warnung anzuzeigen.

8. Verfahren zum automatischen Kompensieren der Wind-Drift während des Sprühens mittels eines landwirtschaftlichen Sprühgeräts, mit folgenden Schritten:
Erzeugen von Eingabedaten (26) bezüglich der Windgeschwindigkeit, der Windrichtung, der Geschwindigkeit und Richtung des Sprühgeräts (12) und einer gewünschten Überlappung beim Sprühen,
Senden der Eingabedaten (26) an eine Steuereinheit (18),
Erzeugen von Ausgabedaten (26) der Steuereinheit (18),
**dadurch gekennzeichnet, dass** das Sprühgeräts (12) über ein Feld (16) in Reaktion auf die Ausgabedaten (26) gelenkt wird, um die gewünschte Überlappung beim Sprühen zu erzielen.

9. Verfahren nach Anspruch 8, wobei die Eingabedaten (26) bezüglich der Windgeschwindigkeit und der Windrichtung durch eine mobile Wetterstation (20) am Sprühgerät (12) erzeugt werden.

10. Verfahren nach Anspruch 8 oder 9, wobei Eingabedaten bezüglich der Höhe des Sprühgeräts (12) erzeugt werden und der Steuereinheit (18) zur Verarbeitung zugeführt werden.

11. Verfahren nach einem der Ansprüche 8 bis 10, wobei die Steuereinheit (18) betriebsmäßig mit einem Navigationssystem (24) zum Lenken des Sprühgeräts (12) verbunden ist.

## Claims

1. A system for automatic compensation for wind-drift for an agricultural sprayer (12), with a control unit (18) which is arranged to receive input data (26) which contains information relative to the wind speed, wind direction, speed of propulsion and direction of the sprayer (12) and the desired overlap when spraying, wherein the control unit (18) is arranged to generate output data (28),
**characterized in that** the output data (28) of the control unit (18) is steering data and is so structured that the desired overlap when spraying is achieved when the sprayer (12) is steered on the basis of the output data (28) of the control unit (18).

2. A system according to claim 1, with a mobile weather station (20) on the sprayer (12) for determining the wind speed and wind direction.

3. A system according to claim 2, wherein the weather station (20) is spaced from the ground.

4. A system according to any of claims 1 to 3, wherein the input data (26) further comprises the height of the sprayer (12).

5. A system according to any of claims 1 to 4, wherein a navigation system (24) is connected to the control unit (18).

6. A system according to any of claims 1 to 5, wherein the output data (28) is used for automatic steering of the sprayer (12).

7. A system according to any of claims 1 to 6, wherein the control unit (18) is operable to check whether the spraying is permissible under the present weather conditions, in the light of local regulations and, should it not be permissible, to display a warning.

8. A method for automatic compensation for wind drift during spraying by means of an agricultural sprayer, with the following steps:
generating input data (26) relative to the wind speed, the wind direction, the speed and direction of the sprayer (12) and a desired overlap when spraying,
transmitting the input data (26) to a control unit (18),
generating output data (28) of the control unit (18),
**characterized in that** the sprayer (12) is steered over the field in response to the output data (28), in order to achieve the desired overlap during spraying.

9. A method according to claim 8, wherein the input data (26) relative to the wind seed and the wind direction is generated by a mobile weather station (20) on the sprayer (12).

10. A method according to claim 8 or 9, wherein input data relative to the height of the sprayer (12) is generated and is supplied to the control unit (18) for processing.

11. A method according to any of claims 8 to 10, wherein the control unit (18) is operatively coupled to a navigation system (24) for steering the sprayer (12).

## Revendications

1. Système pour la compensation automatique de la déviation par le vent pour un appareil de pulvérisation (12) agricole, comprenant une unité de commande (18), qui est aménagée pour obtenir des données d'entrée (26), qui contient des informations concernant la vitesse du vent, la direction du vent, la vitesse d'avancement et la direction de l'appareil de pulvérisation (12) et le recouvrement souhaité lors de la pulvérisation, l'unité de commande (18) étant aménagée pour générer des données de sortie (28), **caractérisé en ce que** les données de sortie (28) de l'unité de commande (18) sont des données de guidage et sont choisies de telle sorte que le recouvrement souhaité est obtenu lors de la pulvérisation lorsque l'appareil de pulvérisation (12) est guidé à l'aide des données de sortie (28) de l'unité de commande (18).

2. Système selon la revendication 1, avec une station météo mobile (20) sur l'appareil de pulvérisation (12) pour l'enregistrement de la vitesse du vent et du sens du vent.

3. Système selon la revendication 2, dans lequel la station météo (20) est espacée du sol.

4. Système selon l'une quelconque des revendications 1 à 3, dans lequel les données d'entrée (26) comprennent également la hauteur de l'appareil de pulvérisation (12).

5. Système selon l'une quelconque des revendications 1 à 4, dans lequel un système de navigation (24) est raccordé à l'unité de commande (18).

6. Système selon l'une quelconque des revendications 1 à 5, dans lequel les données de sortie (28) sont utilisées pour le guidage automatique de l'appareil de pulvérisation (12).

7. Système selon l'une quelconque des revendications 1 à 6, dans lequel l'unité de commande (18) peut être actionnée pour vérifier si la pulvérisation est autorisée dans les présentes conditions météo, à la lumière de règlements locaux, et indiquer un avertissement si celle-ci n'est pas autorisé.

8. Procédé pour la composition automatique de la déviation par le vent pendant la pulvérisation au moyen d'un appareil de pulvérisation agricole, comprenant les étapes suivantes :
génération de données d'entrée (26) concernant la vitesse du vent, la direction du vent, la vitesse et la direction de l'appareil de pulvérisation (12) et un recouvrement souhaité lors de la pulvérisation,
envoi des données d'entrée (26) à une unité de commande (18),
génération de données de sortie (26) de l'unité de commande (18),
**caractérisé en ce que** l'appareil de pulvérisation (12) est guidé sur un champ (16) en réaction aux données de sortie (26), afin d'obtenir le recouvrement souhaité lors de la pulvérisation.

9. Procédé selon la revendication 8, suivant lequel des données d'entrée (26) concernant la vitesse du vent et la direction du vent sont générées par une station météo (20) mobile sur l'appareil de pulvérisation (12).

10. Procédé selon la revendication 8 ou 9, suivant lequel des données d'entrée concernant la hauteur de l'appareil de pulvérisation (12) sont générées et sont amenées à l'unité de commande (18) pour le traitement.

11. Procédé selon l'une quelconque des revendications 8 à 10, suivant lequel l'unité de commande (18) est reliée pendant le service à un système de navigation (24) pour le guidage de l'appareil de pulvérisation (12).
